# DEMANDE DE BREVET EUROPEEN

(11) **EP 0 673 009 A1**
(43) Date de publication de la demande: **20.09.1995**
(21) Numéro de dépôt: 95400540.1
(22) Date de dépôt: 14.03.1995
(51) Int. Cl.: G08B 25/08, G08G 1/123, B60R 25/10, G08B 25/01

(54) **Système et procédé de communication par messagerie à accès reservé en vue de la récuperation d'objets perdus ou volés**

(30) Priorité: 14.03.1994 FR 9402926
(71) Demandeur: Babu, Jean-Pierre, F-75020 Paris (FR)
(72) Inventeur: Babu, Jean-Pierre, F-75020 Paris (FR)
(74) Mandataire: Le Forestier, Eric

(57) **Abrégé**

Un système destiné à établir une communication par messagerie entre des personnes en vue de favoriser la récupération d'objets perdus comprend :
- des objets abonnés identifiés chacun de façon visible par une information unique répondant à un critère algorithmique,
- un serveur de messagerie électronique accessible par terminal et comprenant :
   des moyens d'accès protégé vérifiant si une information d'identification répond au critère,
   des moyens pour accepter et mémoriser des messages en provenance du propriétaire d'un objet perdu ou d'un tiers trouvant un objet, via un terminal ayant accédé au serveur à l'aide de l'identification de l'objet, et pour associer dans une mémoire le contenu desdits messages avec l'objet, et
   des moyens pour délivrer à son propriétaire ou à un tiers, sur un terminal ayant également accédé au serveur, des messages préalablement mémorisés et associés à l'objet.

## Description

La présente invention concerne d'une façon générale un système et un procédé de messagerie destinés à faciliter la localisation et la récupération d'objets perdus ou volés.

Généralement, lorsqu'un objet est perdu par son propriétaire, la seule manière de le faire savoir, et de récupérer éventuellement l'objet si quelqu'un le retrouve, est de passer des annonces ou de poser des affichettes sur la voie publique, ou encore de faire appel à des services d'objets trouvés.

Par ailleurs, lorsqu'un objet est volé, il est nécessaire d'effectuer auprès des services de police une déclaration de vol, et la récupération de l'objet des tributaire des informations recueillies par les services en question.

Mais dans tous les cas, il reste bien rare qu'un objet perdu ou volé soit retrouvé par son propriétaire.

La présente invention vise à proposer un système et un procédé destinés à permettre aux propriétaires de retrouver plus facilement les objets volés ou perdus, et en particulier de stimuler la restitution des objets par des personnes qui les ont trouvés, tout en préservant la confidentialité et leur anonymat.

Ainsi l'invention concerne selon un premier aspect un système destiné à établir une communication par messagerie entre des personnes en vue de favoriser la récupération d'objets perdus, caractérisé en ce qu'il comprend :
- un ensemble d'objets abonnés, chaque objet étant identifié par une information unique répondant à au moins un critère algorithmique déterminé, et portant ladite information de façon visible
- un serveur de messagerie électronique accessible par terminal et comprenant :
   des moyens d'accès protégé comprenant des moyens pour vérifier si une information d'identification d'un objet répond audit critère algorithmique,
   des moyens pour sélectivement accepter et mémoriser des messages en provenance du propriétaire d'un objet abonné perdu ou d'un tiers trouvant un objet abonné, via un terminal ayant accédé au serveur à l'aide de l'identification de l'objet, et pour associer dans une mémoire le contenu desdits messages avec l'identification de l'objet, et
   des moyens pour sélectivement délivrer à son propriétaire ou à un tiers, sur un terminal ayant accédé au serveur à l'aide de l'identification d'un objet, des messages préalablement mémorisés et associés à l'identification dudit objet.

Avantageusement, ladite information unique comprend pour chaque objet abonné:
un numéro de série;
un numéro d'identification dans la série; et
un numéro de clé déterminé par mise en oeuvre d'un algorithme basé au moins sur ledit numéro d'identification, et les moyens de vérification prévus dans les moyens d'accès protégé comprennent un dispositif pour mettre en oeuvre ledit algorithme sur la base au moins dudit numéro d'identification présenté au serveur au cours de la procédure d'accès, et pour comparer la donnée ainsi obtenue avec le numéro de clé également présenté au serveur.

Les moyens pour accepter et mémoriser des messages et les moyens pour délivrer des messages sont de préférence aptes à différencier les messages introduits par des propriétaires et des messages introduits par des tiers.

En vue de favoriser également la récupération d'objets volés, l'information identifiant chaque objet peut permettre de différencier les objets susceptibles d'être perdus des objets susceptibles d'être volés, auquel cas le serveur comprend des moyens sensibles à ladite information, introduite lors de l'accès, pour mettre en oeuvre différents sous-programmes correspondant respectivement aux objets perdus et aux objets volés, les moyens pour accepter, mémoriser et associer des messages sont également actifs pour des objets volés, et les moyens pour délivrer des messages sont inactifs pour des objets volés.

Préférentiellement, la partie de l'information permettant de différencier les objets susceptibles d'être perdus des objets susceptibles d'être volés comprend un ou plusieurs caractères du numéro de série.

Le serveur peut comprendre en outre :
des moyens pour créer un fichier d'objets volés, comprenant l'information d'identification de l'objet et d'autres informations qualifiant l'objet lui-même, ces moyens étant accessibles via les moyens d'accès protégé, et
des seconds moyens d'accès protégé permettant seulement à des services autorisés de se connecter au serveur pour consulter ledit fichier d'objets volés.

Il est préférable que lesdites informations qualifiant l'objet comprennent au moins une information connaissable par le seul propriétaire de l'objet et déterminant son admission dans le fichier d'objets volés.

L'invention propose également, selon un deuxième aspect, un procédé destiné à établir une communication par messagerie entre des personnes en vue de favoriser la récupération d'objets perdus, caractérisé en ce qu'il comprend les étapes suivantes :
- attribuer à chaque objet d'un ensemble d'objets abonnés une information d'identification unique répondant à au moins un critère algorithmique déterminé, et portant ladite information de façon visible
- prévoir un serveur de messagerie électronique accessible par terminal et mettre en oeuvre dans ce serveur les étapes suivantes :
   contrôler l'accès au serveur en vérifiant si une information d'identification d'un objet répond audit critère algorithmique,
   sélectivement accepter et mémoriser des messages en provenance du propriétaire d'un objet abonné perdu ou d'un tiers trouvant un objet abonné, via un terminal ayant accédé au serveur à l'aide de l'identification de l'objet, et associer dans une mémoire le contenu desdits messages avec l'identification de l'objet, et
   sélectivement délivrer à son propriétaire ou à un tiers, sur un terminal ayant accédé au serveur à l'aide de l'identification d'un objet, des messages préalablement mémorisés et associés à l'identification dudit objet.

Préférablement, ladite information unique comprend pour chaque objet abonné:
un numéro de série;
un numéro d'identification dans la série; et
un numéro de clé déterminé par mise en oeuvre d'un algorithme basé au moins sur ledit numéro d'identification, et l'étape de vérification comprend la mise en oeuvre dudit algorithme sur la base au moins dudit numéro d'identification présenté au serveur au cours de la procédure d'accès, et la comparaison de la donnée ainsi obtenue avec le numéro de clé également présenté au serveur.

Dans le but de favoriser également la récupération d'objets volés, le procédé comprend en outre, dans le serveur, l'étape consistant à différencier les objets susceptibles d'être perdus des objets susceptibles d'être volés à partir de l'information identifiant chaque objet et à mettre en oeuvre différents sous-programmes correspondant respectivement aux objets perdus et aux objets volés.

Le procédé peut en outre comprendre, dans le serveur, les étapes consistant à :
créer un fichier d'objets volés, comprenant l'information d'identification de l'objet et d'autres informations qualifiant l'objet lui-même, introduites par le propriétaire de l'objet après autorisation d'accès, et
contrôler l'accès au serveur par des services autorisés pour consulter ledit fichier d'objets volés et des messages associés.

Un premier avantage de la présente invention est que, par la facilité de mise en contact entre un propriétaire et un tiers (cas des objets perdus), par simple connexion à un serveur à partir de chez soi, et par la confidentialité qu'elle assure, elle est incitative.

Un second avantage essentielle réside dans le fait que ce sont des objets qui sont abonnés, et non leurs propriétaires. L'anonymat est donc parfaitement garanti, et les objets abonnés peuvent être vendus à des tiers sans que soit remis en cause leur caractère abonné et les services associés.

D'autres aspects, buts et avantages de la présente invention apparaîtront mieux à la lecture de la description détaillée suivante d'une forme de réalisation préférée de celle-ci, donnée à titre d'exemple non limitatif et faite en référence aux dessins annexés, sur lesquels:
- la figure 1 est un schéma-bloc illustrant dans son ensemble le procédé selon l'invention,
- la figure 2 est un schéma-bloc illustratif de l'application du procédé à un objet perdu,
- la figure 3 est un schéma-bloc illustratif de l'application du procédé à un objet volé,
- la figure 4 illustre un exemple de réalisation d'une plaque de marquage d'un véhicule abonné, et
- la figure 5 illustre la structure générale des menus d'un programme serveur mis en oeuvre dans le procédé de la présente invention.

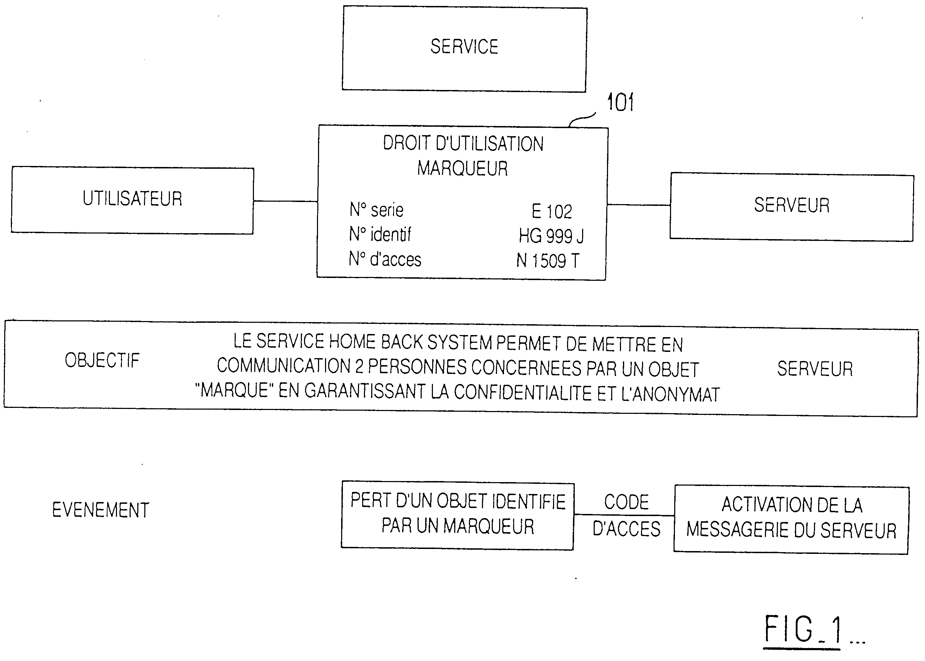

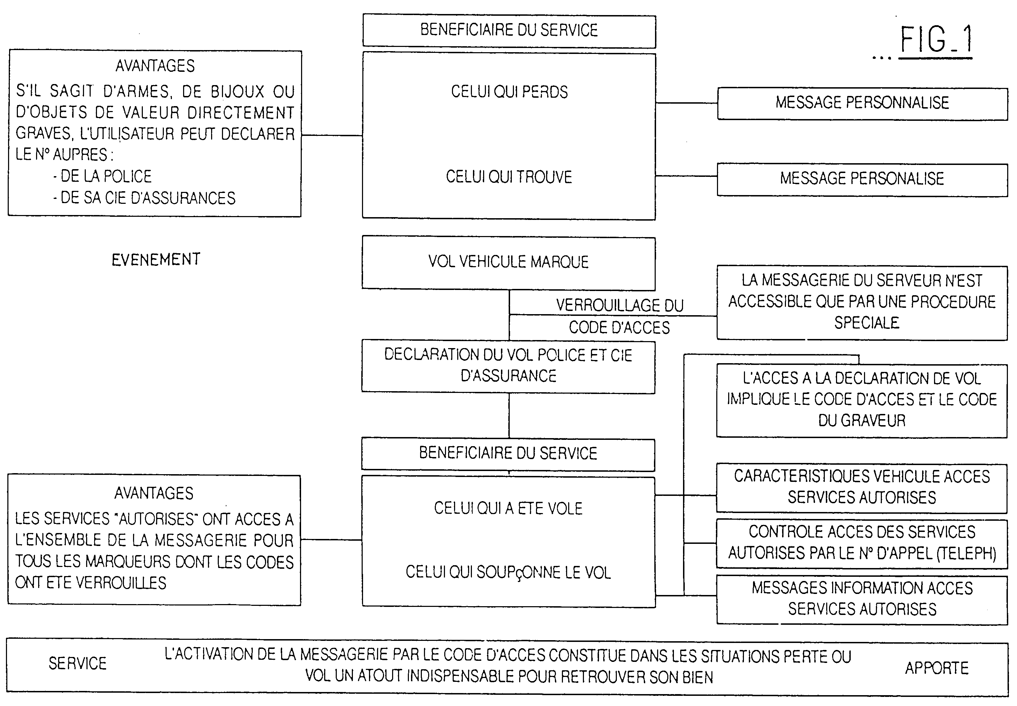

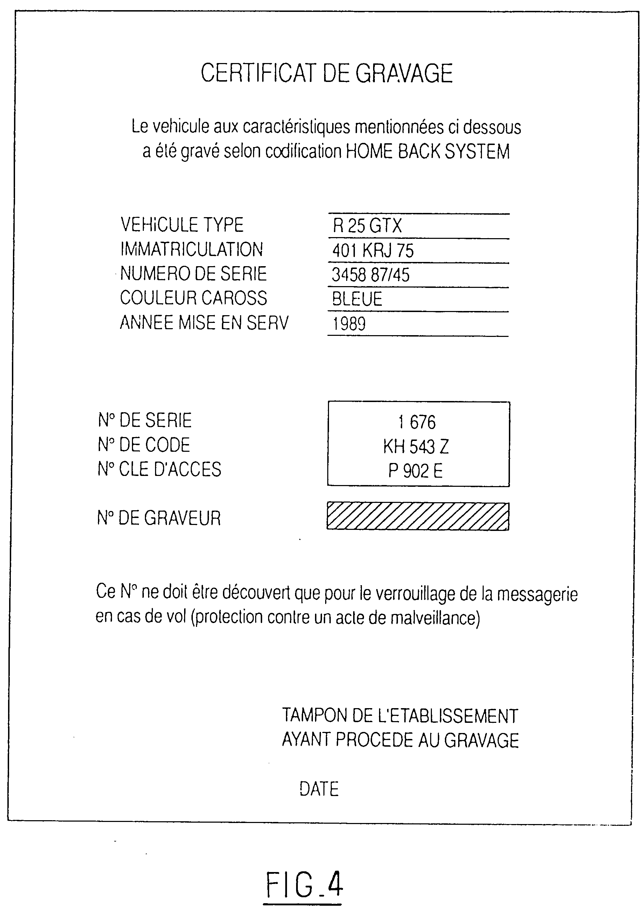

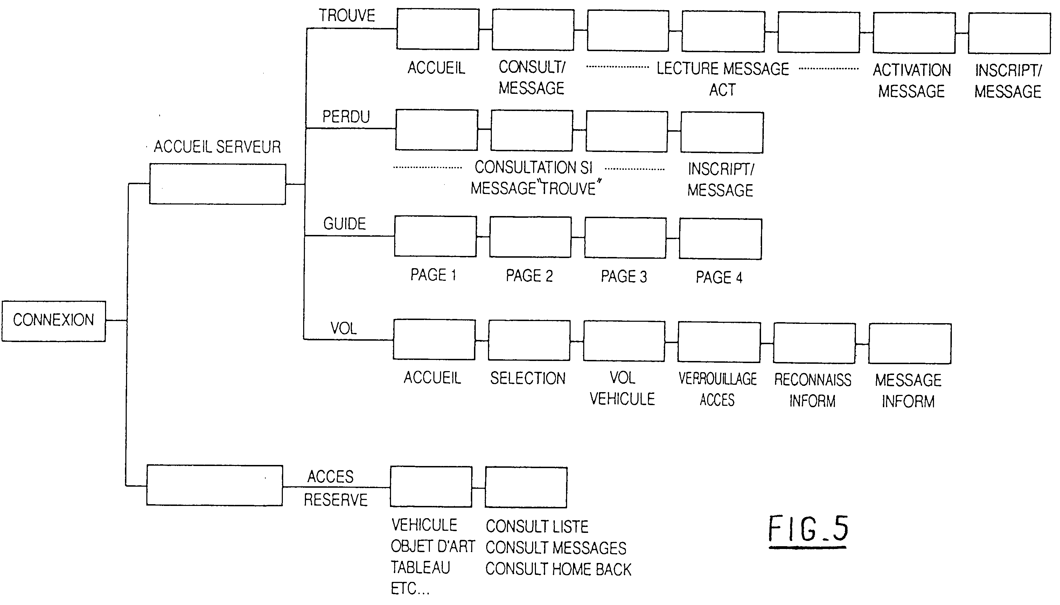

On va maintenant décrire en référence aux figures 1 à 5 le procédé et le système de la présente invention.

Lorsque le propriétaire d'un objet ou d'un bien souhaite abonner cet objet au procédé de la présente invention, on attribue à cet objet, moyennant paiement, une identification unique.

De façon particulièrement préférée, cette identification unique de l'objet comprend :
- un numéro de série;
- un numéro de d'identification dans la série;
- une clé d'accès.

La clé d'accès, univoquement associée au numéro de série et au numéro de code, est déterminée dans le présent exemple par un algorithme de cryptage utilisant le numéro de série et le numéro de code. Ce cryptage peut prendre toute forme et ne sera pas décrit dans le détail.

Ces trois informations sont portées sur l'objet soit par un marqueur (étiquette autocollante, étiquette à coudre, porte-clé, etc...), soit par gravure ou marquage direct sur l'objet.

De façon préférée, sur chaque objet ou sur le support d'identification est également portée une mention destinée à inciter la personne trouvant l'objet à se connecter sur le serveur de messagerie. Cette mention inclut en particulier le numéro d'accès au serveur et le nom du serveur.

Lorsque l'objet abonné et portant une telle identification est perdu par son propriétaire, ce dernier peut, se connecter, de préférence via un terminal M de type "Minitel" (marque déposée), à un centre serveur de messagerie à accès protégé, noté S, pour déposer dans ce serveur un ou plusieurs messages électroniques destinés à toute personne qui trouvera l'objet.

De la même manière, lorsqu'une tierce personne trouve l'objet, il peut accéder également au serveur de messagerie pour y déposer un ou plusieurs messages destinés au propriétaire de l'objet.

On observera ici que l'ordre de dépôt des messages est indifférent. Ainsi, il peut se présenter le cas où une personne trouvant rapidement l'objet perdu peut déposer un message avant que le propriétaire de l'objet n'ait lui-même déposé un objet.

Dans le cas où un objet abonné (par exemple un véhicule automobile) est volé, alors une déclaration de vol doit être faite auprès des services de police, et le centre serveur de l'invention est adapté pour gérer un accès réservé par ces mêmes services de police.

Selon une disposition avantageuse, un caractère ou un groupe de caratères du numéro de série peut être utilisé pour classer les différents objets abonnés par catégories. Et de façon commode, le support de l'identification de l'objet est adapté en conséquence.

On va donner ci-dessous une liste non exhaustive de catégories d'objets et d'exemples de supports associés :

| Série | Objet | Support |
|---|---|---|
| Objets perdus | | |
| A | Clés | Porte-clés |
| B | Vêtements | Etiquettes à coudre |
| C | Divers | Etiquettes adhésives |
| D | Bijoux | Médailles gravées |
| E | Divers | Gravure directe |

| Objets volés | | |
|---|---|---|
| 1 | Véhicules | Gravure directe |
| 2 | Objets d'art | Gravure directe |

Ce ou ces premiers caractères du numéro de série peuvent en outre être utilisés, comme on le verra plus loin, pour aiguiller le serveur vers différents sous-programmes lorsque le propriétaire de l'objet perdu ou volé, ou celui qui l'a trouvé, se connecte au serveur.

On va maintenant décrire dans le détail les diverses procédures mises en oeuvre dans le procédé et le système de la présente invention.

### Objet perdu - propriétaire

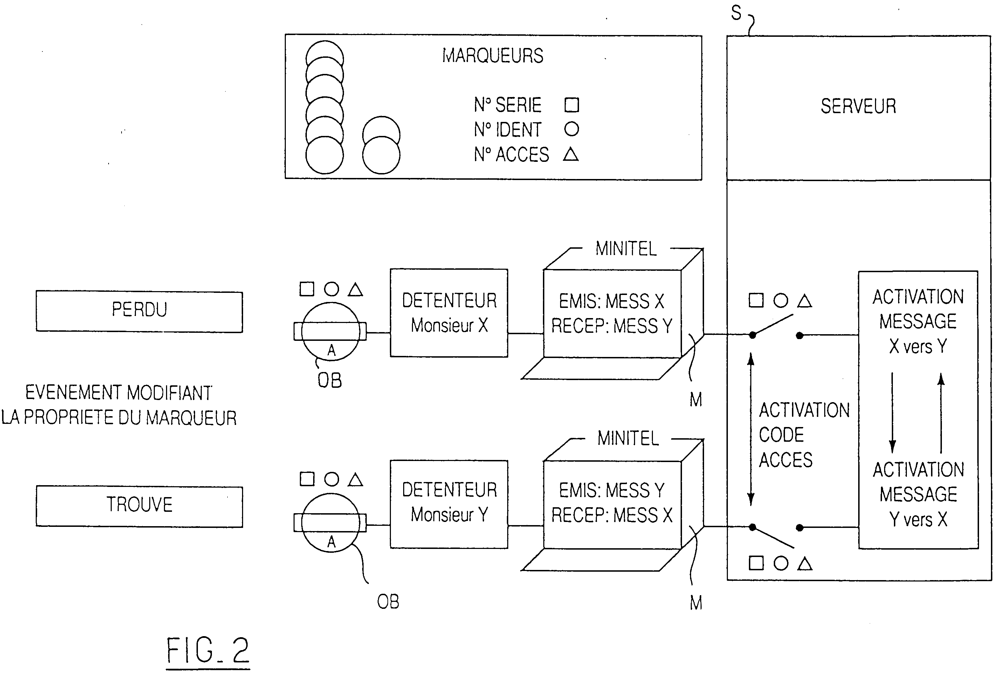

En référence à la figure 2, lorsque le propriétaire d'un objet abonné au service a perdu celui-ci, il se connecte, par son terminal sur le serveur de messagerie. L'entrée dans le service de messagerie passe par la saisie, à la demande du serveur, du numéro de série, du numéro de code dans la série et du numéro de clé d'accès (désignés sur les dessins par un carré, un cercle et un triangle) par le propriétaire, ces numéros ayant été préalablement notés en lieu sûr par le propriétaire.

Le serveur vérifie alors, par mise en oeuvre de l'algorithme de cryptage, si la clé calculée par cet algorithme à partir du numéro de série et du numéro de code dans la série est identique au numéro de clé saisi.

Dans l'affirmative, l'accès au serveur est autorisé. Dans la négative, l'accès est refusé.

Le serveur propose alors au propriétaire de saisir un message X à destination des tierces personnes qui, après avoir trouvé l'objet, se connecteront sur le serveur. Ce message est mémorisé dans le serveur à une adresse qui est déterminée à partir de l'identification de l'objet, de manière à réaliser l'association objet-message. De la même manière, le serveur associe aux messages introduits des entêtes différentes capables de distinguer entre un message introduit par le propriétaire et un message introduit par un tiers.

Ce message peut par exemple indiquer les coordonnées du propriétaire et le montant de la récompense offerte à celui qui retrouve l'objet.

### Objet trouvé - tiers

Lorsqu'une tierce personne trouve l'objet, et qu'elle décide de se connecter sur le serveur, ce dernier lui demande, comme pour le propriétaire, de saisir le numéro de saisie, le numéro d'identification dans la série et le numéro de clé portés par l'objet.

De la même manière, l'accès au serveur est autorisé seulement si le numéro de clé est correct.

Le tiers peut alors, par sélection dans des menus appropriés, consulter le ou les messages X laissés éventuellement par le propriétaire, qui sont localisés dans la mémoire du serveur à partir de l'identification telle qu'elle a été saisie. Il peut également saisir un message Y destiné au propriétaire de l'objet, qui est là encore stocké dans la mémoire du serveur déterminée par l'identification de l'objet. Ce message peut indiquer par exemple indiquer les coordonnées de la personne qui a trouvé l'objet, et le cas échéant un montant de récompense demandée.

Par la suite, le propriétaire peut à nouveau se connecter régulièrement sur le serveur pour lire un éventuel message laissé par la personne ayant trouvé l'objet. Le propriétaire et le tiers peuvent alors entrer en contact l'un avec l'autre pour la restitution de l'objet et le versement de la récompense.

On notera ici que, dans la mémoire du serveur, chaque message introduit par une personne connectée doit être identifié de manière à différentier les messages issus du propriétaire des messages issus des tiers.

### Objet volé - propriétaire

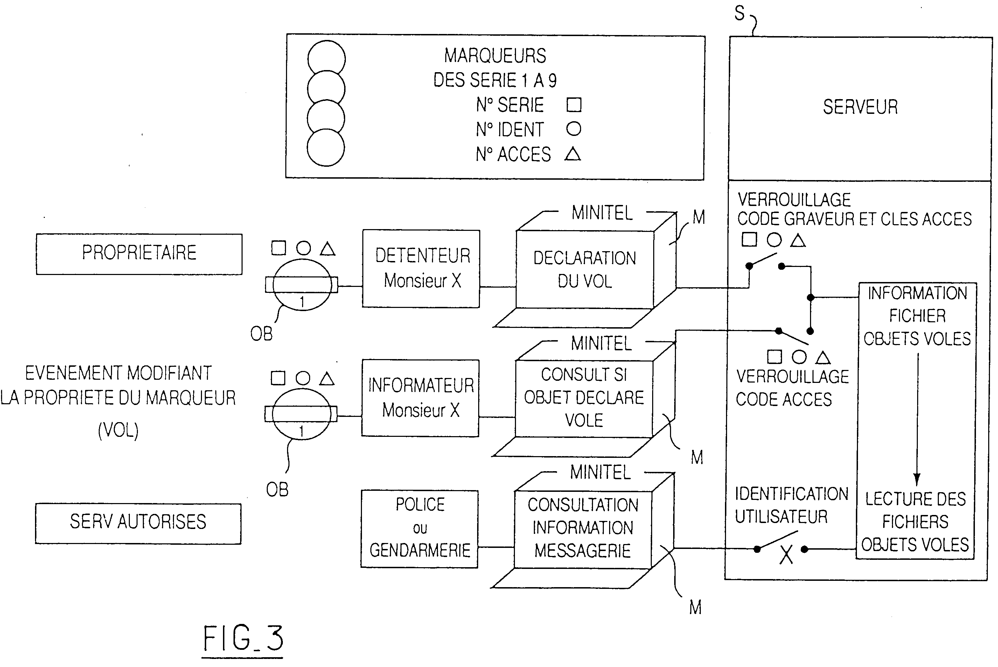

En référence maintenant à la figure 3, on a illustré le processus mis en oeuvre dans le cas d'un objet volé.

Ce processus est de préférence mis en oeuvre automatiquement par le serveur lorsque le ou les premiers caractères du numéro de série saisi par celui qui se connecte indique(nt) qu'il ne peut s'agir que d'un objet volé (véhicules, objets d'art, etc...).

Lorsque le propriétaire d'un objet volé se connecte sur le serveur S, cet accès étant protégé de la même manière que précédemment, le serveur s'aiguille automatiquement sur un sous-programme qui lui rappelle qu'il doit faire préalablement une déclaration de vol auprès des services de police, et lui demande de saisir, outre l'identification de l'objet (informations déjà saisies pour accéder au serveur), des informations relatives à l'objet volé (dans le cas d'un véhicule : type, année, couleur, numéro d'immatriculation, numéro de série numéro du graveur qui a gravé le véhicule, etc...), ainsi que les coordonnées des services de police auxquels le vol a été déclaré.

Dans ce cas, aucun message ne peut normalement être laissé sur le serveur par le propriétaire.

Selon une autre caractéristique de l'invention, pour éviter une utilisation parasitaire du serveur, et en particulier que des personnes mal intentionnées ne déclarent au serveur des véhicules comme volés alors qu'ils ne font que stationner sur la voie publique, l'enregistrement par le serveur d'un véhicule comme volé ne peut s'effectuer que si les informations additionnelles ci-dessus sont saisies, et si elles correspondent bien aux trois identifiants (numéro de série de l'objet abonné, numéro d'identification, numéro de clé). A cet égard, on peut prévoir qu'au moins l'un des ces trois identifiants présente un lien algorithmique particulier avec au moins l'une des informations additionnelles précitées. Par mise en oeuvre de cet algorithme, le serveur peut donc vérifier que les informations additionnelles sont bien cohérentes avec la valeur des identifiants.

### Objet volé - tiers

Lorsqu'un tiers constate la présence, sur la voie publique, d'un véhicule susceptible d'avoir été volé, il accède au serveur, il relève le numéro de série, le numéro d'identification et le numéro de clé gravés sur le véhicule (par exemple sur les vitres) et se connecte au serveur, ces trois numéros autorisant son accès de la même manière que décrit plus haut.

Le serveur vérifie alors dans sa mémoire, à partir des numéros qui ont été saisis par le tiers, si le véhicule identifié par ces numéros se trouve bien dans la liste de véhicules volés enregistrée dans le serveur.

Dans la négative, le serveur en informe le tiers par un message type, et l'invite à se déconnecter.

Dans l'affirmative, le serveur propose alors au tiers de saisir un message, qui peut être typiquement une indication du lieu où se trouve le véhicule. De la même manière que précédemment, chaque message saisi est localisé dans la mémoire du serveur à partir des informations d'identification du véhicule ou autre objet, de manière à réaliser l'association objet-message.

On observera ici que le propriétaire du véhicule, qui n'a pas la charge de retrouver celui-ci, ne peut normalement pas consulter les messages saisis par de tels "informateurs".

### Objet volé - services de police

Le serveur offre, selon la présente invention, une possibilité de connexion par les services de police, à l'ensemble du fichier des objets volés et des messages associés laissés par des tiers.

L'accès au serveur par ces services peut également être protégé, par exemple en demandant au service de police souhaitant se connecter son numéro de téléphone, et en vérifiant dans la mémoire du serveur si un tel numéro est habilité. On notera ici que cette habilitation peut être vérifiée soit à partir d'une liste permamente de numéros mémorisée dans le serveur, soit en vérifiant si le numéro de téléphone saisi correspond à au moins l'un des numéros de téléphone saisis par les propriétaires ayant déclaré au serveur des vols d'objets (voir plus haut).

En variante, on peut attribuer périodiquement aux services de police des clés secrètes d'accès.

L'accès par les services de police aux informations du fichier des véhicules volés peut s'effectuer par numéro de département (figurant dans le numéro d'immatriculation des véhicules), par identifiant dans le système, etc... La consultation des messages associés est possible soit automatiquement, soit à la demande.

### Inactivation et effacement des messages

Afin d'éviter d'encombrer la mémoire du serveur avec un nombre de messages excessif, on peut prévoir des moyens d'inactivation des messages associés à un objet lorsqu'aucune connexion sur le serveur concernant cet objet n'est intervenue depuis une durée déterminée, par exemple un mois. On peut également prévoir, dans le menu principal du serveur, un routage vers un sous-programme permettant au propriétaire d'un objet qui a récupéré celui-ci d'effacer définitivement tous les messages associés audit objet.

Bien entendu, la présente invention n'est nullement limitée à la forme de réalisation décrite et représentée, mais l'homme du métier saura y apporter toute variante ou modification conforme à son esprit.

En particulier, le système et le procédé de l'invention peuvent être simplifiés en prévoyant pour l'identification des objets non pas trois éléments (numéro de série, numéro d'identification et numéro de clé), mais un identificateur unique répondant à certains critères algorithmiques bien déterminés. Dans ce cas, l'accès au serveur est conditionné par la seule vérification par ledit serveur si ces critères algorithmiques sont remplis ou non.

## Revendications

1. Système destiné à établir une communication par messagerie entre des personnes en vue de favoriser la récupération d'objets perdus, caractérisé en ce qu'il comprend :
- un ensemble d'objets abonnés (OB), chaque objet étant identifié par une information unique répondant à au moins un critère algorithmique déterminé, et portant ladite information de façon visible
- un serveur de messagerie électronique (S) accessible par terminal (M) et comprenant :
des moyens d'accès protégé comprenant des moyens pour vérifier si une information d'identification d'un objet répond audit critère algorithmique,
des moyens pour sélectivement accepter et mémoriser des messages (X, Y) en provenance du propriétaire d'un objet abonné perdu ou d'un tiers trouvant un objet abonné, via un terminal (M) ayant accédé au serveur à l'aide de l'identification de l'objet, et pour associer dans une mémoire le contenu desdits messages avec l'identification de l'objet, et
des moyens pour sélectivement délivrer à son propriétaire ou à un tiers, sur un terminal (M) ayant accédé au serveur à l'aide de l'identification d'un objet, des messages (X, Y) préalablement mémorisés et associés à l'identification dudit objet.

2. Système selon la revendication 1, caractérisé en ce que ladite information unique comprend pour chaque objet abonné:
un numéro de série;
un numéro d'identification dans la série; et
un numéro de clé déterminé par mise en oeuvre d'un algorithme basé au moins sur ledit numéro d'identification, et en ce que les moyens de vérification prévus dans les moyens d'accès protégé comprennent un dispositif pour mettre en oeuvre ledit algorithme sur la base au moins dudit numéro d'identification présenté au serveur au cours de la procédure d'accès, et pour comparer la donnée ainsi obtenue avec le numéro de clé également présenté au serveur.

3. Système selon la revendication 1 ou 2, caractérisé en ce que les moyens pour accepter et mémoriser des messages (X, Y) et les moyens pour délivrer des messages sont aptes à différencier les messages (X) introduits par des propriétaires et des messages (Y) introduits par des tiers.

4. Système selon l'une des revendications 1 à 3, destiné à favoriser également la récupération d'objets volés, caractérisé en ce que l'information identifiant chaque objet permet de différencier les objets susceptibles d'être perdus des objets susceptibles d'être volés, en ce que le serveur (S) comprend des moyens sensibles à ladite information, introduite lors de l'accès, pour mettre en oeuvre différents sous-programmes correspondant respectivement aux objets perdus et aux objets volés, en ce que les moyens pour accepter, mémoriser et associer des messages sont également actifs pour des objets volés, et en ce que les moyens pour délivrer des messages sont inactifs pour des objets volés.

5. Système selon la revendication 4 rattachée à la revendication 2, caractérisé en ce que la partie de l'information permettant de différencier les objets susceptibles d'être perdus des objets susceptibles d'être volés comprend un ou plusieurs caractères du numéro de série.

6. Système selon l'une des revendications 4 et 5, caractérisé en ce que le serveur (S) comprend en outre :
des moyens pour créer un fichier d'objets volés, comprenant l'information d'identification de l'objet (OB) et d'autres informations qualifiant l'objet lui-même, ces moyens étant accessibles via les moyens d'accès protégé, et
des seconds moyens d'accès protégé permettant seulement à des services autorisés de se connecter au serveur pour consulter ledit fichier d'objets volés.

7. Système selon la revendication 6, caractérisé en ce que lesdites informations qualifiant l'objet comprennent au moins une information connaissable par le seul propriétaire de l'objet et déterminant son admission dans le fichier d'objets volés.

8. Procédé destiné à établir une communication par messagerie entre des personnes en vue de favoriser la récupération d'objets perdus, caractérisé en ce qu'il comprend les étapes suivantes :
- attribuer à chaque objet d'un ensemble d'objets abonnés une information d'identification unique répondant à au moins un critère algorithmique déterminé, et portant ladite information de façon visible
- prévoir un serveur de messagerie électronique accessible par terminal et mettre en oeuvre dans ce serveur les étapes suivantes :
contrôler l'accès au serveur en vérifiant si une information d'identification d'un objet répond audit critère algorithmique,
sélectivement accepter et mémoriser des messages en provenance du propriétaire d'un objet abonné perdu ou d'un tiers trouvant un objet abonné, via un terminal ayant accédé au serveur à l'aide de l'identification de l'objet, et associer dans une mémoire le contenu desdits messages avec l'identification de l'objet, et
sélectivement délivrer à son propriétaire ou à un tiers, sur un terminal ayant accédé au serveur à l'aide de l'identification d'un objet, des messages préalablement mémorisés et associés à l'identification dudit objet.

9. Système selon la revendication 8, caractérisé en ce que ladite information unique comprend pour chaque objet abonné:
un numéro de série;
un numéro d'identification dans la série; et
un numéro de clé déterminé par mise en oeuvre d'un algorithme basé au moins sur ledit numéro d'identification, et en ce que l'étape de vérification comprend la mise en oeuvre dudit algorithme sur la base au moins dudit numéro d'identification présenté au serveur au cours de la procédure d'accès, et la comparaison de la donnée ainsi obtenue avec le numéro de clé également présenté au serveur.

10. Procédé selon la revendication 8 ou 9, pour favoriser également la récupération d'objets volés, caractérisé en ce qu'il comprend en outre, dans le serveur, l'étape consistant à différencier les objets susceptibles d'être perdus des objets susceptibles d'être volés à partir de l'information identifiant chaque objet et à mettre en oeuvre différents sous-programmes correspondant respectivement aux objets perdus et aux objets volés.

11. Procédé selon l'une des revendications 8 à 10, caractérisé en ce qu'il comprend en outre, dans le serveur, les étapes consistant à :
créer un fichier d'objets volés, comprenant l'information d'identification de l'objet et d'autres informations qualifiant l'objet lui-même, introduites par le propriétaire de l'objet après autorisation d'accès, et
contrôler l'accès au serveur par des services autorisés pour consulter ledit fichier d'objets volés et des messages associés.
